**Europäisches Patentamt**

**European Patent Office**

**Office européen des brevets**

(19)

(11) Veröffentlichungsnummer : **0 049 322**
**B1**

(12)

# EUROPÄISCHE PATENTSCHRIFT

(45) Veröffentlichungstag der Patentschrift :
13.06.84

(51) Int. Cl.³ : **G 06 F 13/00**

(21) Anmeldenummer : 81104288.6

(22) Anmeldetag : 04.06.81

(54) Auslesesicherung bei Einchip-Mikroprozessoren.

(30) Priorität : 13.09.80 DE 3034581

(43) Veröffentlichungstag der Anmeldung :
14.04.82 Patentblatt 82/15

(45) Bekanntmachung des Hinweises auf die Patenterteilung : 13.06.84 Patentblatt 84/24

(84) Benannte Vertragsstaaten :
DE FR GB

(56) Entgegenhaltungen :
FR-A- 2 401 459
US-A- 4 183 085

(73) Patentinhaber : *ROBERT BOSCH GMBH*
**Postfach 50**
**D-7000 Stuttgart 1 (DE)**

(72) Erfinder : **Schleupen, Richard, Dipl.-Ing.**
**Gottlob-Ansel-Strasse 6**
**D-7121 Ingersheim (DE)**

## Beschreibung

Stand der Technik

Die Erfindung geht aus von einer Sicherung von Einchip-Rechnern nach der Gattung des Hauptanspruchs. Zum Schutz der Daten ist es bereits bekannt, nach dem Einlesen der Daten die Leitungen des Datenbusses, die nach außen führen und für weitere Informationen nicht mehr gebraucht werden, zu durchtrennen. Dieses Vorgehen hat jedoch den Nachteil, daß ein solches Durchtrennen bei vergossenen Chips nur sehr schwer möglich ist. Hierzu werden Diamantbohrer verwendet, die durch das Durchbohren des Chips an der entsprechenden Stelle die Leitungen auftrennen. Ein weiterer Nachteil ist, daß Mikroprozessoren mit aufgetrennten Datenbusleitungen nicht mehr für andere Zwecke verwendet werden können, so daß eine neue Programmierung und die Verwendung für einen anderen Zweck nicht mehr möglich ist.

Aus der FR-OS 24 01 459 ist eine Vorrichtung mit einem Mikroprozessor bekannt, bei der Daten und Informationen nur dann auslesbar sind, wenn zuvor ein Schlüsselwort eingegeben worden ist, das mit einem gespeicherten Schlüsselwort übereinstimmt. Diese bekannte Vorrichtung hat den Nachteil, daß bei einer Kenntnis des Schlüsselwortes, die beispielsweise auch durch Probieren zu erlangen ist, ein Auslesen der Daten und damit des gespeicherten Programmes spätestens nach einigen Versuchen möglich ist. Die bekannte Vorrichtung ist daher nicht in der Lage, einen sicheren Programmschutz zu gewährleisten. Demgegenüber setzt sich die Erfindung zur Aufgabe, im Einchip-Mikroprozessor enthaltene Programme vor dem Zugriff Dritter sicher zu schützen.

Vorteile der Erfindung

Die erfindungsgemäße Einrichtung zur Sicherung von Programmen mit den kennzeichnenden Merkmalen des Hauptanspruchs hat demgegenüber Vorteil, daß eine mechanische Bearbeitung des Chips nicht nötig ist und daß nach dem Löschen des Programms sämtliche Datenleitungen wieder freigegeben sind. Als weiterer Vorteil ist anzusehen, daß die Auslesesperre nur durch ein vollständiges Löschen des Programminhaltes des EPROMS möglich ist. Es ist daher möglich, in ein solches EPROM ein Programm einzuschreiben und dieses Programm zusammen mit dem Mikroprozessor und einer dazugehörigen Schaltung zu testen. Nach dem Austesten der Schaltung wird ein weiterer Befehl eingegeben, um die nach außen führenden Datenbusleitungen ganz oder teilweise zu sperren. Ein Zugriff zu den im EPROM abgelegten Daten, die üblicherweise das Programm enthalten, ist dann nicht mehr möglich. Soll der Chip anderweitig verwendet werden, so ist das EPROM in bekannter Weise löschbar, wobei auch die Information gelöscht wird, die für die Sperrung der Datenleitung sorgte. Dadurch ist das im EPROM abgelegte Programm jedoch auch ganz zerstört, so daß zwar eine weitere Verwendung des Mikroprozessors gegeben ist, jedoch auf den Programminhalt nicht zurückgegriffen werden kann.

Durch die im Unteranspruch aufgeführte Maßnahme ist eine vorteilhafte Weiterbildung der im Hauptanspruch angegebenen Sicherungsschaltung möglich, indem die Sperrgatter als UND-Gatter ausgebildet sind. Dadurch wird eine einfache und kostengünstige Realisierungsmöglichkeit geboten.

Durch das Belegen einer Speicherzelle können entweder eine oder mehrere Leitungen gesperrt werden. Außerdem ist die Sperrung erst dann möglich, wenn die Daten eingelesen und überprüft worden sind. Dies kann dadurch geschehen, daß ein entsprechender Befehl erst nach dem vollständigen Überprüfen des bereits vorhandenen Programms angewendet wird, so daß ab diesem Zeitpunkt ein weiteres Überprüfen oder Auslesen dieser Daten nicht möglich ist.

Zeichnung

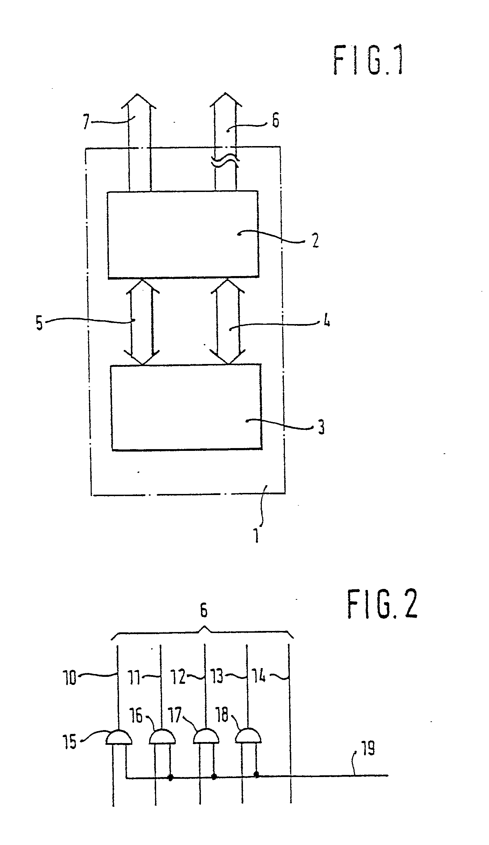

Ein Ausführungsbeispiel der Erfindung ist in der Zeichnung dargestellt und in der nachfolgenden Beschreibung näher erläutert. Es zeigen Fig. 1 den prinzipiellen Aufbau eines Einchip-Mikroprozessors und Fig. 2 die Beschaltung der Datenleitungen mit Gattern.

Beschreibung der Ausführungsbeispiele

In Fig. 1 ist in einem Gehäuse 1 neben einem Rechner 2 zumindest ein Speicher 3 untergebracht. Der Rechner 2 steht mit dem Speicher 3 innerhalb des Gehäuses über eine Datenbusleitung 4 und eine Adressbusleitung 5 in Verbindung. Vom Rechner 2 nach außerhalb des Gehäuses 1 führt eine weitere Datenbusleitung 6 und eine Ein-/Ausgabeleitung 7.

Der Speicher 3 kann sowohl Festspeicher als auch veränderbare Speicher aufweisen oder aber nur aus festen Speichern bestehen. Über die Adressleitung 5 werden die in den Speichern enthaltenen Daten abgerufen und gelangen über die Datenleitung 4 zum Rechner 2. Die Datenbusleitung 4 und die Adressbusleitung 5 sind von außen nicht zugängig. Sind die Daten im Speicher 3 eingelesen, so wird anhand der Datenbusleitung 6, die nach außen führt, geprüft, ob der Rechner ordnungsgemäß arbeitet. Hierzu werden an der Ein-/Ausgabeleitung 7 entsprechende Geräte angeschlossen. In vielen Fällen wird nach dem ordnungsgemäßen Arbeiten der Schaltung die Datenbusleitung 6 nicht mehr benötigt, sondern sämtliche, sich ständig ändernden Größen gelangen über die Ein-/Ausgabeleitung in den Rechner und wieder aus ihm heraus. Will man nun verhindern, daß die im Speicher 3 abgespeicherten festen Daten ausgelesen werden, so ist die Datenbusleitung 6 zu sperren. Dies gestaltet sich besonders einfach, wenn die Speichereinheit 3 oder ein Teil davon als EPROM ausgeführt ist. Nach dem Überprüfen wird der Dateninhalt des EPROMs erweitert, indem eine weitere Speicherzelle mit Information belegt wird, die die Anweisung erteilt, die Datenbusleitung 6 zu sperren. Dies kann nach dem Prüfen erfolgen. Die Information ist dann über die Datenbusleitung 6 nicht mehr auslesbar. Wird nun das EPROM gelöscht, so wird durch die Löschung der entsprechenden Speicherzellen auch die Datenbusleitung 6 wieder freigegeben, jedoch wird dadurch auch die gesamte sonstige Information, die im EPROM enthalten ist, gelöscht, so daß die sonstigen im EPROM enthaltenen Daten verloren sind. Der Rechner in seiner Gesamtheit kann jedoch weiterverwendet werden.

In Fig. 2 ist die Realisierung einer solchen Sperrschaltung für die Datenbusleitung 6 dargestellt. In die Datenleitungen 10, 11, 12, 13 des Datenbusses 6 sind Und-Glieder 15, 16, 17 und 18 eingeschaltet, an deren Eingänge einerseits die vom Rechner kommenden Datenleitungen angeschlossen sind, während andererseits eine weitere Leitung 19 zum Rechner 2 führt. Eine Datenleitung 14 des Datenbusses 6 weist kein Und-Glied auf. Ist eine bestimmte Speicherzelle im Speicher 3 nicht belegt, so weist die Leitung 19 ein 1-Signal auf. Die Und-Glieder 15-18 lassen die am Datenbus 6 anliegenden Signale durch, so daß an den Datenleitungen Daten durchgelassen werden und somit an den Ausgängen des Chips abgreifbar sind. Ist nun der Chip überprüft, so wird eine bestimmte Speicherzelle des Speichers 3 belegt, so daß über die Leitung 19 ein 0-Signal an die Und-Glieder 15-18 gelangt. Die Datenleitungen 10-13 der Datenbusleitung 6 sind dadurch gesperrt, während an der Datenleitung 14 noch Impulse nach außen gelangen können, die beispielsweise zur Steuerung irgendwelcher weiterer Funktionen dienen. Die Sperreingänge der Und-Glieder brauchen nicht alle auf die Leitung 19 geschaltet sein, sie sind beispielsweise auch einzeln dem Mikroprozessor zuführbar, so daß je nach Bedarf und Speicherinhalt im Speicher 3 durch den Rechner 2 beliebig viele Ausgänge gesperrt werden können, so daß die Dateninformation unvollständig bleibt und daher nicht ausgewertet werden kann. Dadurch ist es möglich, einen Teil der Datenleitungen zur Verarbeitung weiterer Informationen zu verwenden. Um einen Eingriff zu vermeiden, ist es notwendig, eine Schaltungsanordnung nach Fig. 2 im Gehäuse 1 des Rechners zu integrieren. Neben Und-Gliedern ist es möglich, auch andere sperrende Gatter zu verwenden, beispielsweise Nor-Glieder oder Nand-Glieder, wobei diese Gatter gleichzeitig als Treiberbausteine ausgebildet sein können.

Die ganze Schaltungsanordnung hat den Vorteil, daß per Programmierung die nicht auszulesenden Bereiche gesperrt sind und von außen nicht zugänglich sind. Eine Aufhebung dieser Sperre ist möglich, hat jedoch zur Folge, daß auch das gespeicherte Programm gelöscht werden muß.

## Ansprüche

1. Einrichtung zur Sicherung von Programmen in Einchiprechnern mit Rechenwerken, mit von außen programmierbaren Speichern und mit Datenbusleitungen, die den Einchiprechner verlassen und in die für Ausgangssignale schaltbare Gatter eingeschaltet sind, die beim Vorliegen einer bestimmten vom Rechner abgegebenen Information gesperrt sind, dadurch gekennzeichnet, daß die Gatter (15 bis 18) durch eine vorgegebene Information einer bestimmten, direkt auf die Gatter (15 bis 18) einwirkenden Speicherzelle des Speichers (3) ständig sperrbar sind, und daß der Teil des Speichers, der die bestimmte Speicherzelle und feste Daten zumindest teilweise enthält, als EPROM ausgebildet ist.

2. Einrichtung nach Anspruch 1, dadurch gekennzeichnet, daß die Gatter (15 bis 18) als UND-Glieder ausgebildet sind.

## Claims

1. A device for protecting programs in single-chip computers which are provided with arithmetic units, with externally programmable memories and with data bus lines which emerge from the single-chip computer and into which gates are connected which can be gated for output signals and which are disabled in the presence of a certain information which is supplied by the computer, characterised in that the gates (15 to 18) can be continuously disabled by a predetermined information from a certain storage cell, which acts directly on the gates (15 to 18), of the memory (3), and that the memory section which at least partially contains the certain storage cell and permanent data is constructed as an EPROM.

2. A device according to Claim 1, characterised in that the gates (15 to 18) are constructed as AND gates.

## Revendications

1. Installation pour assurer la sécurité des programmes dans des calculateurs sur pastilles avec des dispositifs de calcul, avec des mémoires programmables de l'extérieur, et avec des conducteurs de transmission de données qui partent du calculateur sur pastilles et sur lesquels sont branchées des portes commutables pour des signaux de sortie, portes qui sont bloquées en présence d'une information déterminée et délivrée par le calculateur, installation caractérisée en ce que les portes (15 à 18) sont en permanence susceptibles d'être fermées par une information prédéfinie d'une cellule déterminée, agissant directement sur les portes (15 à 18), de la mémoire (3), et que la partie de la mémoire qui contient la cellule déterminée et au moins partiellement les données fixes, revêt la forme d'une EPROM.

2. Installation selon la revendication 1, caractérisée en ce que les portes (15 à 18) sont des portes ET.

FIG.1

FIG.2